# EUROPEAN PATENT SPECIFICATION

(11) **EP 3 771 592 B1**
(45) Date of publication and mention of the grant of the patent: **07.12.2022**
(21) Application number: 20188830.2
(22) Date of filing: 31.07.2020
(51) Int. Cl.: B60L 53/302, H01B 7/42, H01R 3/00, H02G 3/03

(54) **PASSIVE DEVICE FOR COOLING ELECTRICAL CABLE**
PASSIVE VORRICHTUNG ZUR KÜHLUNG EINES ELEKTRISCHEN KABELS
DISPOSITIF PASSIF DE REFROIDISSEMENT DE CÂBLE ÉLECTRIQUE

(30) Priority: 01.08.2019 FR 1908839
(43) Date of publication of application: 03.02.2021
(73) Proprietor: Aptiv Technologies Limited, 14004 St. Michael (BB)
(72) Inventor: ALBERTIN, Christian, 28000 Chartres (FR); MENEZ, Frédéric, 78125 Hermeray (FR); SOMASUNDARAM, Deenadhayalan, Kallakurichi Taluk, Tamil Nadu (IN); BELLIARD, Frédéric, 28170 Tremblay les Villages (FR); CHARVET, Sébastien, 28210 Senantes (FR); MADHAVA, Surya-Prakash, Sudhakar Nagar, Tamil Nadu (IN)
(74) Representative: INNOV-GROUP

(56) References cited:
- WO-A1-2019/011920
- US-A1- 2001 011 602
- US-A1- 2009 167 078
- US-B2- 10 207 589

## Description

### Technical field

The invention relates to the field of automotive connector systems and more particularly to the field of power connector systems for motor vehicles.

### Prior art

In the field of motor vehicle and notably of electric, hybrid or rechargeable (plug-in) hybrid vehicles, high currents may be transmitted through networks of cables and/or power electrical circuits (of the vehicle itself or connected to the vehicle) such as those interconnecting together elements such as a recharging terminal, a battery, a motor, a voltage converter, etc.

The passage of high currents through connector contacts and cables generates heat (a solution allowing the heat produced by the passage of current through the length of the cable to be dissipated is described in document US10207589B2 or in document WO2019011920A1).

Now, on the one hand, it is desired for cables and connectors to be able to withstand increasingly high currents. Thus, for example, the higher the rate at which it is desired to charge batteries, the higher the currents delivered must be.

However, on the other hand, generally, it is desired by motor-vehicle manufacturers for "on-board" power connection devices to have the lowest possible weight, bulk and cost, and for these structures to be as integrated as possible.

A contribution to the improvement of power connector systems is provided below, this contribution aiming to furnish an at least partial solution to at least some of the aforementioned requirements.

### Summary of the invention

It is proposed to act on the connections of the power electrical conductors, using a passive cooling device (i.e. a device for dissipating heat). The present disclosure provides a device according to claim 1. Advantageous embodiments are provided in dependent claims.

More particularly, an electrical-connector cooling device is proposed. This cooling device comprises a sleeve itself comprising at least two ducts, for the passage of a cable through each of these ducts, and at least two fins. Each of these ducts extends along a longitudinal axis. Each of the fins extends essentially radially from the ducts, towards outside the sleeve. These two fins define therebetween a space forming a convection channel. This convection channel is radially open towards outside the sleeve and extends, over at least one peripheral segment, around the two ducts and between the ducts.

Thus, by virtue of this device, when it is mounted on a connector or another piece of apparatus, heat produced in cables and/or in contacts may be transmitted via the ducts and fins by conduction through the material from which the sleeve is made. Furthermore, the channel that allows air to flow around each duct and between the fins contributes to removing, by convection, into the environment, the heat transmitted via the ducts and fins.

Such a device is simpler and less expensive than an active cooling solution. It allows a connector and/or a piece of apparatus to operate with higher currents and its lifetime to be extended. Reciprocally, without necessarily increasing current, it is possible, by virtue of the aforementioned cooling device, to decrease the dimensions of cables and connectors (or even of the contacts of such connectors) or of the pieces of apparatus to which these cables are connected.

In this document, and notably in the claims, the term "cable" is used generically to designate, simply, either a cable, a wire, a cable harness or a wire harness. Therefore, the ducts and gutters described in this document may each accommodate a cable, a wire, a cable harness or a wire harness.

This device also optionally comprises any of the following features, which may each be implemented independently or in combination with one or more others thereof:
- the sleeve is made of moulded plastic;
- the sleeve comprises at least two portions that are separable from each other at a separation surface passing through a central axis of each of the ducts; for example, one of the separable portions forms a holder and the other portion forms a cover; for example, this cover is symmetric with respect to a plane that is essentially perpendicular to the longitudinal axis of each of the ducts;
- the sleeve is flexible;
- the fins comprise a notch for the passage of a cable other than those that pass through the ducts;
- at least one duct has a smooth internal surface; alternatively, at least one duct has a ribbed internal surface;

According to another aspect, a connection assembly is claimed, this assembly comprising a connector and a cooling device such as mentioned above. The connector comprises a casing with a rear wall comprising at least two passages, each respectively for the egress of one cable. The cooling device is mechanically fastened to the connector and/or in thermal continuity therewith. Then, each of the ducts is located in the extension of one passage.

This connection assembly also optionally comprises the following feature:
- the cooling device comprises a collar and a cap that each respectively make contact with one wall of the casing.

### Brief description of the drawings

Other features, aims and advantages of the aforementioned device will be apparent on reading the following detailed description with reference to the appended drawings, which are given by way of non-limiting example and in which:
[Fig. 1] schematically shows in lateral elevation one example of an embodiment of a connection assembly comprising a passive cooling device;
[Fig. 2] schematically shows in perspective an example of a passive cooling device similar to that mounted on the connection assembly of Figure 1;
[Fig. 3] schematically shows in perspective one of the portions of the passive cooling device of Figure 2;
[Fig. 4] schematically shows in perspective that portion of the passive cooling device which is shown in Figure 3, cables having been placed in said portion; this figure notably illustrates the conduction and convection of heat flows;
[Fig. 5] schematically shows seen from above another example of a connection assembly;
[Fig. 6] schematically shows in perspective the connection assembly of Figure 5, placed in an example of an environment;
[Fig. 7] schematically shows seen from above, via its internal face, one of the portions of another embodiment of the passive cooling device;
[Fig. 8] schematically shows in perspective the portion of the passive cooling device shown in Figure 7;
[Fig. 9] schematically shows seen from above, via its internal face, one of the portions of yet another embodiment of the passive cooling device;
[Fig. 10] schematically shows in perspective the portion of the passive cooling device shown in Figure 9;
[Fig. 11] schematically shows seen from above, via its external face, another embodiment of the passive cooling device;
[Fig. 12] schematically shows in perspective the passive cooling device shown in Figure 11.

### Detailed description

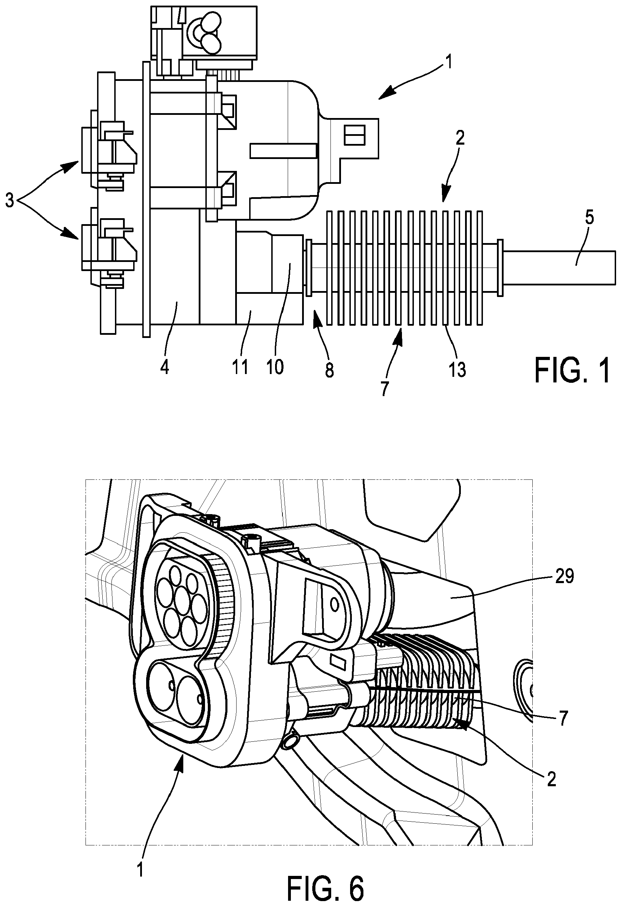

One example of an embodiment of a connection assembly 1 comprising a passive cooling device 2 is described below with reference to Figure 1. This connection assembly 1 corresponds to socket mounted on a rechargeable hybrid (plug-in) or electric vehicle. A charging plug connected to a recharging terminal may be plugged into this socket in order to recharge its batteries.

In this example, the connection assembly 1 comprises a plurality of connectors 3 that are integrated into the same casing 4, a passive cooling device 2 and cables 5 (only the cables 5 that pass through the cooling device 2 are shown in Figure 1).

The connectors 3 house contacts (not shown in Figure 1). Some of these contacts are for example dedicated to transmission of signals, whereas others are dedicated to the transport of a power current. Certain power contacts are dedicated to relatively slow charging and others are dedicated to rapid charging with a current that may be relatively high (for example 350 amps). The contacts 6 dedicated to rapid charging are connected to cables 5, the cross-sectional area of which is for example about 95 mm² (however, of course the cooling device 2 may be tailored to the cable cross-sectional areas used in power connector systems and in particular to cross-sectional areas comprised between 6 and 120 mm²). It is these cables 6 that are shown in the figures.

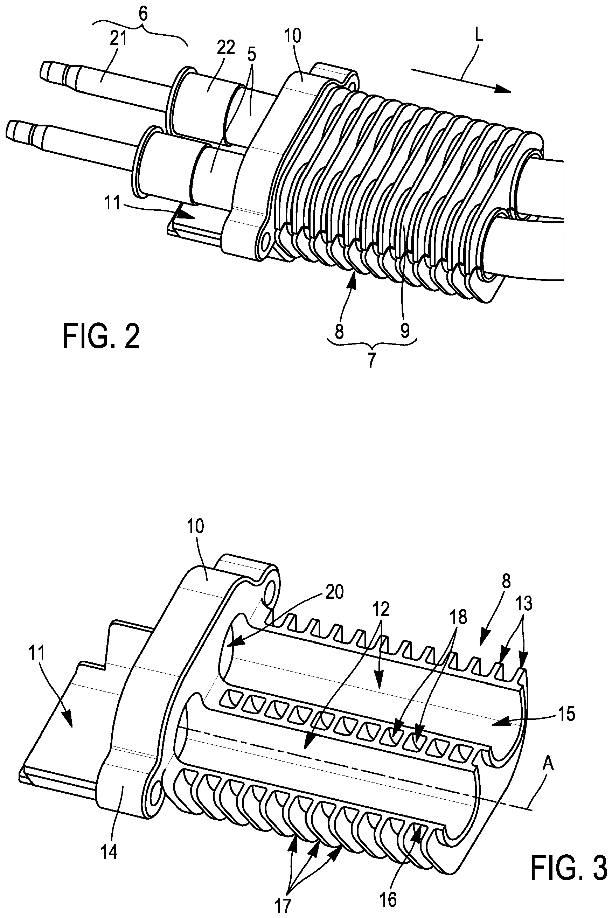

As shown in Figure 2, the cooling device 2 itself comprises a sleeve 7 made up of two portions that are separable from each other. One of these portions forms a holder 8. The other of these portions forms a cover 9. The cables 5 each pass through the sleeve 7 in its longitudinal direction L. The holder 8 and the sleeve 7 are moulded plastic parts.

As shown in Figure 3, the holder 8 comprises a collar 10, a cap 11, two gutters 12 and convection fins 13. The collar 10 is applied against the back wall of the casing 4. The holder 8 is mechanically fastened to the casing 4, for example using screws that pass through flanges 14 that extend laterally from the collar 10. The cap 11 extends, from the collar 10 towards a free end, on the other side of the collar 10 with respect to the gutters 12. When the holder 8 is fastened to the casing 4, the cap 11 makes contact with the casing 4 under the end of the contacts (see Figures 1, 2 and 4). Thus, when the sleeve 7 is fastened to the casing 4, the cap 11 and the collar 10 are in thermal continuity with the casing 4 in order to ensure a transfer of heat from the connector 3 to the holder 8.

The gutters 12 extend longitudinally from the collar 10, along a longitudinal axis A. They each comprise a smooth internal surface 15 and an external surface 16 provided with convection fins 13. The fins 13 extend radially (essentially perpendicular to the longitudinal axis A) from the external surface 16. The fins 13 are regularly spaced in a direction parallel to the longitudinal axis A. Two neighbouring fins 13 define, therebetween, an open channel or groove 17 that has a "U" shape. In the example illustrated in Figure 3, the holder 8 comprises eleven channels. However, the number of channels 17, and the area of the fins 13, notably depends on the desired cooling efficiency and on the space available in the environment of the cooling device 2. The channels 17, each of which encircles gutters 12 of the holder 8, are located in continuity with one another. In other words, each fin 13 of one of these gutters 12 is placed in the same plane as a corresponding fin 13 of the neighbouring gutter 12. Between two neighbouring gutters 12, the channels 17 meet and therefore open onto windows 18.

As shown in Figure 2, the cover 9 also comprises two gutters, convection fins and windows the structure and properties of which are similar to those mentioned above in relation to the description of the holder 8. The gutters 12 of the holder 8 and of the cover 9 form two cylindrical half-tubes that, when the holder 8 and the cover 9 are closed one on the other form cylindrical ducts 19. The internal surface of each duct 19 is rotationally symmetric. The internal surfaces 15 of the respective gutters of the holder 8 and of the cover 9 are symmetric with respect to a plane passing through the longitudinal central axis A of each of the ducts 19. In other words, the holder 8 and the cover 9 form portions that are separable from each other at a separation surface passing through the longitudinal central axis A of each of the gutters 19.

Thus, when the cover 9 is placed on the holder 8, their respective gutters 12 are located facing, with their curvature in opposition, in order to define two ducts, each of which is respectively suitable for passage of a cable, the internal surface 15 of the gutters 12 lying in proximity to or making contact with the (insulating sheath) of a cable 5.

The cover 9 is mounted on the holder 8, for example by introducing a segment of each gutter of the cover 9 that protrudes from at least one of the external surfaces of the end fins 13, into an aperture 20 provided in the collar 10 and by placing the longitudinally opposite end of the cover 9 against the holder 8. This end may be held against the holder 8 using screws, a cable tie, etc. (these elements are not shown in the figures). The cover 9 is therefore simple to mount on the holder 8. When the cover 9 is placed on the holder 8, the fins of the cover 9 and of the holder 8 are located in the extension of one another, so that their respective windows 18 and channels 17 coincide. These channels 17 therefore extend the entire circumference of the ducts 19, right around the two ducts 19 and between the ducts 19.

Figure 2 shows male power contacts 6 (but the invention is similarly applicable to the cooling of female contacts). They each comprise a pin 21 extended by a connection segment 22. The connection segment 22 forms a ferrule into which is inserted the free end of a cable 5. Each cable 5 passes through the collar 10 via an aperture 20 that is located in the extension of a passage formed in the back wall of the casing 4. Each contact 6 is positioned, with respect to the holder 8, so that the connection segment or ferrule is located in front of the collar 10, in proximity thereto, and at least partially above the cap 11 (i.e. overlapping therewith relative to the longitudinal direction L). Thus, the heat produced at the contacts 6 is effectively transmitted to the walls of the cavity in which the contact 6 in question is housed, then to the walls of the casing 4 in the vicinity of this cavity, and lastly to the holder 8 and to the cover 9, by way of the cap 11, of the collar 10 and of the cables 5 that pass through the sleeve 7.

The thermal conductivity of the material from which the sleeve 7 is made, for example measured according to standard ASTM E 1461, is advantageously higher than 15 watts/(metre x kelvin) (however, a material of less thermal conductivity, for example possibly of 0.8 watts/(metre x kelvin) may potentially be used, notably if the mechanical properties of the material are favoured).

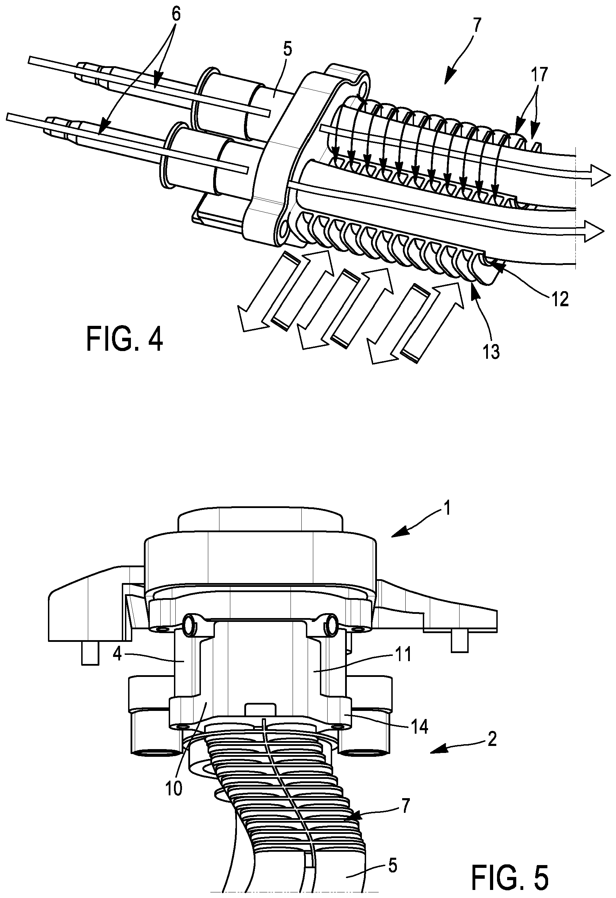

Thus, as illustrated in Figure 4, the heat produced by the passage of a current through a contact 6 and through a cable 5 is transmitted through the sleeve 7 - arrows following the cables 5 - via the gutters 12 and the fins 13. Air, which is able to flow freely through each channel 17 all the way around each duct 19, allows at least some of the heat to be removed by convection (cooler air arrives in each channel - arrows directed from outside to inside the sleeve 7 -, is heated in contact with the surfaces of the fins 13 and of the wall of the gutters 12, at the bottom of the channels 17, then is evacuated - arrows directed from inside to outside the sleeve 7).

Tests and simulations have shown that, under certain conditions, the temperature of a contact 6 connected to a cable 5 of 95 mm² may be decreased from 47.1 °C without a cooling device 2 to 35.1 °C with a cooling device 2. The cooling device 2 allows significant improvements to be achieved in cooling terms (for example of about 25% in the temperature in degrees Celsius). This allows present charging capacity to be increased without further increasing the dimensions of the cables, of the connectors and of the contacts. Reciprocally, in certain applications, a passive cooling device 2, such as those described in this document, allows cable and contact cross-sectional areas to be decreased while preserving temperatures lower than or equal to those obtained with the same current, but with larger cable and contact cross-sectional areas.

The material from which the sleeve 7 is made may advantageously have mechanical properties such that the sleeve 7 may be deformed. Specifically, Figure 5 illustrates another example of an embodiment of a connection assembly 1 comprising a passive cooling device 2. This passive cooling device 2 is similar to that described with reference to Figures 1 to 4. Some of its environment is shown in Figure 6. As may be seen, this environment may be cramped. However, it remains possible to house therein a passive cooling device 2 such as those described in this document. However, as illustrated in Figure 5, it is advantageous for the sleeve 7 to be able to be slightly curved to match its shape to its environment. The sleeve 7 may also be used to guide and/or protect the cables 5 that pass therethrough.

The sleeve 7 may take other forms, notably in order to fit in with its environment. Some examples of such a cover 9 and/or sleeve 7 are given below.

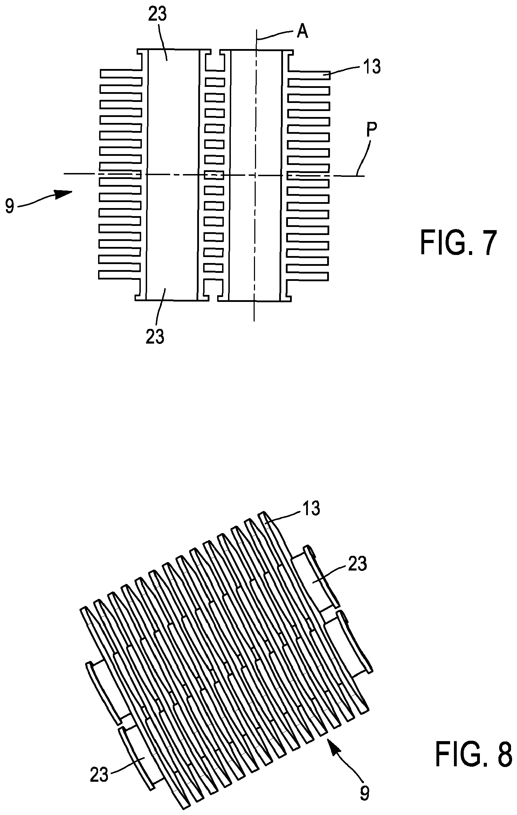

Thus, another example of an embodiment of a cover 9 for a cooling device 2 is described with reference to Figures 7 and 8. This example differs from that described above essentially in that, when it is not deformed, it is symmetric with respect to a plane P essentially perpendicular to the longitudinal axis A of each of the ducts. This facilitates mounting thereof on a holder 8 since its two ends 23 may equally well serve, either to be inserted into an aperture 20 provided in a collar 10 or to receive a cable tie to hold it against a holder 8.

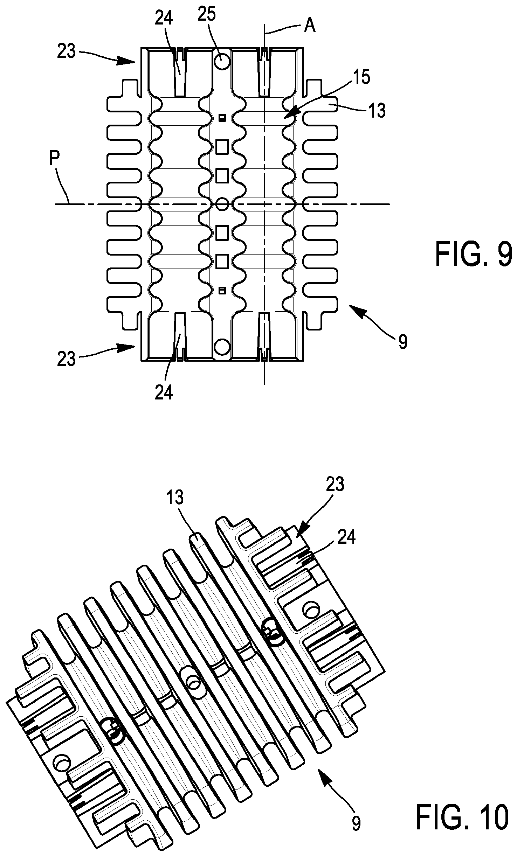

Yet another example of an embodiment of a cover 9 for a cooling device 2 is described with reference to Figures 9 and 10. Just like the preceding one, when this example is not deformed, it is also symmetric with respect to a plane P that is essentially perpendicular to the longitudinal axis A of each of the ducts. Each of the longitudinal ends 23 of the ducts is equipped with an elastic tongue 24 allowing these ends 23 to be held in an easily demountable way in an aperture 20 provided in the collar 10. Furthermore, the internal surface 15 of the gutters is ribbed. The ribbed regions intended to make contact with the insulating sheath of the cable exert a local pressure that allows, in this location, the thickness of this sheath and hence contact thermal resistance to be decreased. Thus, a better thermal conduction between the cable 5 and the sleeve 4 is obtained. The regions of the internal surface 15 that are intended to make contact with a cable 5 coincide, along the longitudinal axis A, with the fins 13. Two orifices 25 are provided between the two gutters, at each of the ends of the cover 9, with a view to potential fastening, by screw for example.

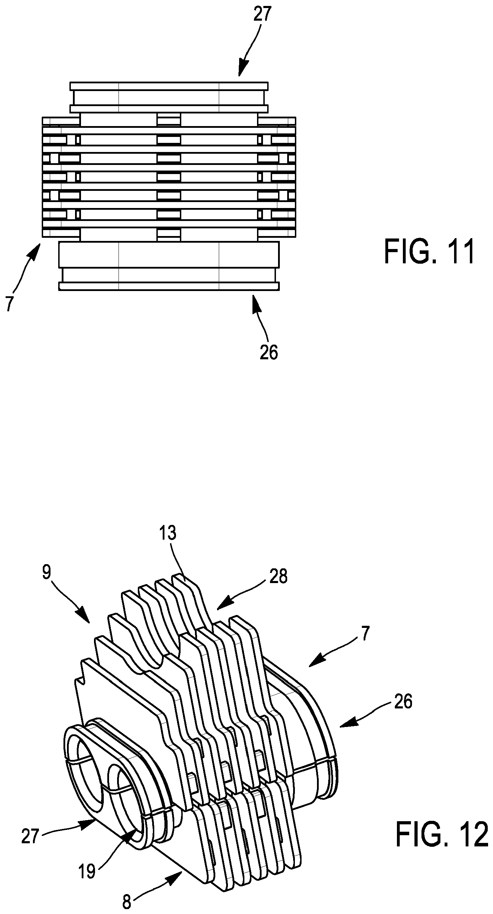

Another example of an embodiment of a sleeve 7 for a cooling device 1 is described with reference to Figures 11 and 12. Unlike the cover 9 of the two preceding examples, the cover 9 is not symmetric with respect to a plane that is essentially perpendicular to the longitudinal axis of each of the ducts. Specifically, on the one hand, the sleeve 7 comprises a front end 26 intended to interact with apertures 20 provided in the collar 10, which end is different from its opposite, back end 27, which is intended to accommodate a cable tie, and, on the other hand, certain convection fins 13 comprise a notch 28 for the passage of a cable other than those 5 passing through the ducts 19. For example, as illustrated in Figure 6, a cable harness 29 may be arranged to pass above the sleeve 7 and the fins 13 are extended to within proximity of this cable harness 29, which is then at least partially incorporated into the notch 28, so as to better guide the flow of air and to thereby improve the dissipation of heat from the cooling device, while fitting into the space available in the environment of the sleeve (in Figure 6, the cooling device 2 is not such as shown in Figures 11 and 12; the harness 29 in Figure 6 is therefore not incorporated into notches 28).

Many other variants may be envisaged. For example, the sleeve 7 may be of more or fewer than two portions 8, 9; the ducts 19 are not necessarily completely circularly closed and/or not closed over all their length (a variant of this type could for example resemble the embodiment illustrated in Figure 4, in which the cover is not present); the sleeve 7 is made of a material other than a plastic (a metal or a metal alloy for example), etc.

## Claims

1. Passive cooling device for cooling electrical cables, comprising a sleeve (7) itself comprising at least two ducts (19) for the passage of a cable (5) through each of these ducts, and at least two fins (13), each of these ducts (19) extending along a longitudinal axis (A), and the fins (13) extending essentially radially from the ducts (19), towards outside the sleeve (7),
**characterized in that** the at least two fins (13) define therebetween a space forming a convection channel (17) that is radially open towards outside the sleeve (7) and that extends over at least one peripheral segment around the two ducts (19) and between the ducts (19).

2. Device according to Claim 1, wherein the sleeve (7) is made of moulded plastic.

3. Device according to either of the preceding claims, wherein the sleeve (7) comprises at least two portions (8, 9) that are separable from each other at a separation surface passing through a longitudinal central axis (A) of each of the ducts (19).

4. Device according to the preceding claim, wherein one of the separable portions forms a holder (8) and the other portion forms a cover, this cover (9) being symmetric with respect to a plane (P) that is essentially perpendicular to the longitudinal axis (A) of each of the ducts (19).

5. Device according to one of the preceding claims, wherein the sleeve (7) is flexible.

6. Device according to one of the preceding claims, wherein the fins (13) comprise a notch (28) for the passage of a cable (29) other than those (5) that pass through the ducts (19).

7. Device according to one of the preceding claims, wherein at least one duct (19) has a smooth internal surface (15).

8. Device according to one of Claims 1 to 6, wherein at least one duct (19) has a ribbed internal surface (15).

9. Connection assembly comprising a connector (3) and a cooling device (2) according to one of the preceding claims, the connector (3) comprising a casing (4) with a rear wall comprising at least two passages, each respectively for the egress of one cable (5), and the cooling device (2) being mechanically fastened to the connector and making thermal contact therewith, with each of the ducts (19) located in the extension of one passage.

10. Connection assembly according to Claim 9, wherein the cooling device (2) comprises a collar (10) and a cap (11) that each respectively make contact with one wall of the casing (4).

## Patentansprüche

1. Passive Kühlvorrichtung zum Kühlen elektrischer Kabel, umfassend eine Hülse (7), die selbst mindestens zwei Durchgänge (19) zur Durchführung eines Kabels (5) durch jeden dieser Durchgänge und mindestens zwei Lamellen (13) umfasst, wobei sich jeder der Durchgänge (19) entlang einer Längsachse (A) erstreckt und sich die Lamellen (13) im Wesentlichen radial von den Durchgängen (19) hin zu einer Außenseite der Hülse (7) erstrecken,
**dadurch gekennzeichnet, dass** die mindestens zwei Lamellen (13) einen Raum dazwischen definieren, der einen Konvektionskanal (17) bildet, der radial hin zu der Außenseite der Hülse (7) offen ist und der sich über mindestens ein Umfangssegment um die zwei Durchgänge (19) und zwischen den Durchgängen (19) erstreckt.

2. Vorrichtung nach Anspruch 1, wobei die Hülse (7) aus geformtem Kunststoff besteht.

3. Vorrichtung nach einem der vorhergehenden Ansprüche, wobei die Hülse (7) mindestens zwei Abschnitte (8, 9) umfasst, die an einer Trennfläche voneinander trennbar sind, die durch eine Längsmittelachse (A) jedes der Durchgänge (19) verläuft.

4. Vorrichtung nach dem vorhergehenden Anspruch, wobei einer der trennbaren Abschnitte einen Halter (8) bildet und der andere Abschnitt eine Abdeckung bildet, wobei die Abdeckung (9) in Bezug auf eine Ebene (P) symmetrisch ist, die im Wesentlichen senkrecht zu der Längsachse (A) jedes der Durchgänge (19) ist.

5. Vorrichtung nach einem der vorhergehenden Ansprüche, wobei die Hülse (7) flexibel ist.

6. Vorrichtung nach einem der vorhergehenden Ansprüche, wobei die Lamellen (13) eine Einkerbung (28) zur Durchführung eines anderen Kabels (29) als jener (5), die durch die Durchgänge (19) verlaufen, umfasst.

7. Vorrichtung nach einem der vorhergehenden Ansprüche, wobei mindestens ein Durchgang (19) eine glatte Innenfläche (15) aufweist.

8. Vorrichtung nach einem der Ansprüche 1 bis 6, wobei mindestens ein Durchgang (19) eine gerippte Innenfläche (15) aufweist.

9. Verbindungsanordnung, die einen Verbinder (3) und eine Kühlvorrichtung (2) nach einem der vorhergehenden Ansprüche umfasst, wobei der Verbinder (3) ein Gehäuse (4) mit einer Rückwand umfasst, die mindestens zwei Durchführungen, jede für den Austritt jeweils eines Kabels (5), umfasst, und wobei die Kühlvorrichtung (2) mechanisch an dem Verbinder befestigt ist und in thermischem Kontakt damit ist, wobei jeder der Durchgänge (19) in der Erstreckung einer Durchführung angeordnet ist.

10. Verbindungsanordnung nach Anspruch 9, wobei die Kühlvorrichtung (2) eine Manschette (10) und eine Kappe (11) umfasst, die jeweils in Kontakt mit jeweils einer Wand des Gehäuses (4) sind.

## Revendications

1. Dispositif de refroidissement passif pour le refroidissement de câbles électriques, comprenant un manchon (7) comprenant quant à lui au moins deux conduits (19) pour le passage d'un câble (5) à travers chacun de ces conduits, et au moins deux ailettes (13), chacun de ces conduits (19) s'étendant le long d'un axe longitudinal (A), et les ailettes (13) s'étendant de manière essentiellement radiale à partir des conduits (19) vers l'extérieur du manchon (7),
**caractérisé en ce que** les au moins deux ailettes (13) définissent entre elles un espace formant un canal de convection (17) qui est ouvert radialement vers l'extérieur du manchon (7) et qui s'étend sur au moins un segment périphérique autour des deux conduits (19) et entre les conduits (19).

2. Dispositif selon la revendication 1, dans lequel le manchon (7) est fait de plastique moulé.

3. Dispositif selon l'une ou l'autre des revendications précédentes, dans lequel le manchon (7) comprend au moins deux parties (8, 9) qui sont séparables l'une de l'autre au niveau d'une surface de séparation passant par un axe central longitudinal (A) de chacun des conduits (19).

4. Dispositif selon la revendication précédente, dans lequel une des parties séparables forme un support (8) et l'autre partie forme un couvercle, ce couvercle (9) étant symétrique relativement à un plan (P) qui est essentiellement perpendiculaire à l'axe longitudinal (A) de chacun des conduits (19).

5. Dispositif selon l'une des revendications précédentes, dans lequel le manchon (7) est flexible.

6. Dispositif selon l'une des revendications précédentes, dans lequel les ailettes (13) comprennent une échancrure (28) pour le passage d'un câble (29) autre que ceux (5) qui passent à travers les conduits (19).

7. Dispositif selon l'une des revendications précédentes, dans lequel au moins un conduit (19) comporte une surface intérieure (15) lisse.

8. Dispositif selon l'une des revendications 1 à 6, dans lequel au moins un conduit (19) comporte une surface intérieure (15) cannelée.

9. Ensemble de connexion comprenant un connecteur (3) et un dispositif de refroidissement (2) selon l'une des revendications précédentes, le connecteur (3) comprenant une enveloppe (4) avec une paroi arrière comprenant au moins deux passages, chacun respectivement pour la sortie d'un câble (5), et le dispositif de refroidissement (2) étant attaché mécaniquement au connecteur et établissant un contact thermique avec celui-ci, chacun des conduits (19) étant situé dans le prolongement d'un passage.

10. Ensemble de connexion selon la revendication 9, dans lequel le dispositif de refroidissement (2) comprend un collier (10) et une coiffe (11) qui établissent chacun respectivement un contact avec une paroi de l'enveloppe (4).
